Europäisches Patentamt

European Patent Office

Office européen des brevets

(19)

(11) Veröffentlichungsnummer : **0 123 221**
**B1**

(12) **EUROPÄISCHE PATENTSCHRIFT**

(45) Veröffentlichungstag der Patentschrift :
04.03.87

(21) Anmeldenummer : 84104111.4

(22) Anmeldetag : 12.04.84

(51) Int. Cl.⁴ : **B 25 J 11/00**

(54) **Handhabungssystem, insbesondere für kleine Lasten und/oder begrenzte Zugriffswege.**

(30) Priorität : 23.04.83 DE 3314836

(43) Veröffentlichungstag der Anmeldung :
31.10.84 Patentblatt 84/44

(45) Bekanntmachung des Hinweises auf die Patenterteilung : 04.03.87 Patentblatt 87/10

(84) Benannte Vertragsstaaten :
AT BE CH FR GB IT LI LU NL SE

(56) Entgegenhaltungen :
DE-A- 2 330 393
DE-A- 2 537 800
DE-A- 2 654 517
FR-A- 2 385 185
US-A- 3 051 328
US-A- 3 665 148

(73) Patentinhaber : Schaper, Hans-Hermann
Silcherstrasse 4
D-7513 Stutensee-Fr. (DE)

(72) Erfinder : Schaper, Hans-Hermann
Silcherstrasse 4
D-7513 Stutensee-Fr. (DE)

(74) Vertreter : Geitz, Heinrich, Dr.-Ing.
Postfach 2708 Kaiserstrasse 156
D-7500 Karlsruhe 1 (DE)

## Beschreibung

Die Erfindung betrifft ein insbesondere für kleine Lasten und/oder begrenzte Zugriffswege bestimmtes Handhabungssystem mit mehreren Verstelleinheiten zum Bewegen eines Arbeitsmittels jeweils in einer Richtung bzw. um eine Achse, die unter Weglassung der einen oder anderen, für den jeweiligen Bedarfsfall nicht benötigten Verstelleinheit miteinander kombinierbar sind, und bei dem das Arbeitsmittel einem in einer Längsführung einer Translationseinheit mittels eines Linearantriebs hin- und herbewegbaren Schlitten zugeordnet und gegenüber letzterem durch von dem Linearantrieb der Translationseinheit unabhängige Antriebe um zwei im Winkel zueinander verlaufende Achsen bewegbar ist.

Ein aus mehreren Verstelleinheiten zum Erzeugen jeweils einer translatorischen oder rotatorischen Bewegung eines Arbeitsmittels in einer Richtung bzw. um eine Achse aufgebautes Handhabungssystem ist aus der DE-A-2 537 800 bekannt, bei dem die Verstelleinheiten mit austauschbar zueinanderpassenden Verbindungseinrichtungen versehen und somit unter Weglassung der einen oder anderen, für den jeweiligen Bestimmungszweck nicht benötigten Verstelleinheit miteinander kombinierbar sind.

Bei dem vorbekannten Handhabungssystem handelt es sich um einen modular aufgebauten und an den jeweiligen Bedarfsfall gut anpaßbaren Manipulator, der auch in einfacher Weise auf veränderte Bedürfnisse umrüstbar ist. Verbesserungsbedürftig erscheint der vorbekannte Manipulator allerdings insbesondere hinsichtlich der räumlichen Bewegbarkeit seines Arbeitsmittels. Diesem Bedürfnis soll durch die Erfindung Rechnung getragen und ein insoweit verbessertes, im Aufbau aber gleichwohl einfaches Handhabungssystem geschaffen werden.

Diese Aufgabe ist bei einem Handhabungssystem nach dem Oberbegriff des Patentanspruchs 1 dadurch gelöst, daß als Arbeitsmittel ein zwischen einer Greif- und Öffnungslage betätigbarer Greifer dreh- und schwenkbar an einem vom Schlitten der Translationseinheit entfernten Ende eines seinerseits an den Schlitten angelenkten Unterarms angelenkt ist und daß ein Schwenk- und Drehantrieb für den Greifer ein Differentialgetriebe mit zwei einander gegenüberliegend und um die Greiferschwenkachse drehbar gelagerten Kegelrädern umfaßt, die unabhängig voneinander wahlweise rechts- oder linksdrehend angetrieben sind und gemeinsam mit einem zwischen ihnen aufgenommenen dritten Kegelrad in Zahneingriff stehen, das um eine rechtwinklig zur Greiferschwenkachse verlaufende Achse drehbar gelagert und mit dem der sich in der Zahnraddrehachse forterstreckende Greifer dreh- und axialfest verbunden ist, und daß die beiden drehbar um die Greiferschwenkachse gelagerten Kegelräder mittels am Schlitten der Translationseinheit angeflanschter Antriebsmotoren über in Parallelebenen zueinander verlaufende Umschlingungstriebe angetrieben sind.

Angesichts der Anlenkung des als Greifer ausgebildeten Arbeitsmittels an einen seinerseits am Schlitten einer Translationseinheit angelenkten Unterarm gelingt es in Verbindung mit anderen Verstelleinheiten, wie beispielsweise einer quer zur Längsführung der Translationseinheit verfahrbaren Grundeinheit, einer auf dieser aufgenommenen Hubeinheit sowie einer zwischen letzterer und der Translationseinheit angeordneten Rotationseinheit, innerhalb eines vorbestimmten Arbeitsraums mit dem räumlich bewegbaren Greifer jeden beliebigen Punkt präzise anzufahren.

Aus der FR-A-2 385 185 ist zwar bereits ein Manipulator mit einem teleskopartig in einer Richtung verfahrbaren Ausleger und einem über mehrere jeweils gelenkig aneinander angelenkte Glieder mit dem Ausleger verbundenen Arbeitsmittel bekannt, aber dabei handelt es sich um einen schweren Gelenk-Manipulator mit in den einzelnen Gelenken bzw. zwischen dem Arbeitsmittel und dem letzterem benachbarten Armteil angeordneten Antriebsmotoren zum Erzeugen von Bewegungen des Arbeitsmittels um jeweils eine Achse. Der bauliche Aufwand eines derartigen Gelenk-Manipulators ist beträchtlich.

Demgegenüber ist bei der Erfindung der in der oben erläuterten Weise mit einem Differentialgetriebe ausgestattete Schwenk- und Drehantrieb für den zwischen einer Greif- und Öffnungslage betätigbaren Greifer vorgesehen. Angesichts dieser Ausbildung des Schwenk- und Drehantriebs für den Greifer führt eine gleichsinnige Drehung der beiden einander gegenüberliegenden Zahnräder des Differentialgetriebes zu einem Verschwenken des Greifers um seine Anlenkachse, hingegen eine gegensinnige Drehung der genannten Zahnräder zur Drehung des Greifers um seine mit der Drehachse des dritten Kegelrades zusammenfallende Längsachse. Durch entsprechende Betätigung der einander gegenüberliegenden Kegelräder des Differentialgetriebes sind mithin Greiferbewegungen im gesamten Greiferschwenkbereich bei gleichzeitiger Greiferdrehung um die Greiferlängsachse realisierbar.

Es ist zwar auch schon in der US-A-3 665 148 ein Manipulator mit im Anlenkbereich eines als Schweißzange ausgebildeten Arbeitsmittels angeordneten Differentialgetriebe beschrieben, aber dieses Differentialgetriebe ist am Ende eines verfahrbaren Auslegers angeordnet und angesichts des Fehlens eines gegenüber dem Ausleger verschwenkbaren Unterarms unproblematisch antreibbar. Demgegenüber werden bei der Erfindung die beiden drehbar um die Greiferschwenkachse gelagerten Kegelräder mittels am Schlitten der Translationseinheit angeflanschter Antriebsmotoren über in Parallelebenen zueinander verlaufende Umschlingungstriebe angetrieben, bei denen es sich zweckmäßigerweise um Profilriemen oder jedenfalls um so ausgebildete Antriebsmittel handeln kann, daß die Antriebsbewegungen schlupffrei übertragen werden.

Eine andere vorteilhafte Ausgestaltung der Erfindung ist dadurch gekennzeichnet, daß der an einem Ende des Schlittens der Translationseinheit angelenkte Unterarm mittels eines Getriebemotors, der an dem vom Unterarm entfernten Ende des Schlittens angeflanscht ist, über einen sich längs durch den Schlitten hindurcherstreckenden Umschlingungstrieb angetrieben wird. Mit Vorteil kann dieser Umschlingungstrieb zwei im Abstand voneinander in Parallelebenen gleichsinnig und synchron umlaufende Umschlingungsmittel aufweisen, bei denen es sich wiederum insbesondere um Profilriemen handeln kann.

Eine gleichfalls vorteilahfte Weiterbildung der Erfindung besteht darin, daß die in Parallelebenen umlaufenden Umschlingungstriebe des Schwenk- und Drehantriebs des Greifers über um die Anlenkachse des Unterarms an den Schlitten der Translationseinheit frei drehend gelagerte Umlenkscheiben geführt sind, die ihrerseits über je einen weiteren Umschlingungstrieb angetrieben werden, wobei diese weiteren Umschlingungstriebe sich ebenfalls in Parallellage zueinander durch den Schlitten hindurcherstrecken und über am Schlitten einander gegenüberliegend angeordnete Treibscheiben, deren Drehachsen miteinander fluchten, motorisch angetrieben und mit den Abtriebswellen von einander gegenüberliegend am Schlitten der Translationseinheit angeordneten Antriebsmotoren für den Greiferschwenk- und Drehantrieb drehfest verbunden sind.

Eine ebenfalls vorteilhafte Weiterbildung der Erfindung ist dadurch gekennzeichnet, daß der an dem vom Schlitten der Translationseinheit entfernten Ende des Unterarms angelenkte Greifer mittels eines Bowdenzugs, der sich durch den Schlitten, den daran angelenkten Unterarm und das im Bereich der Greiferschwenkachse angeordnete Differentialgetriebe hindurcherstreckt, zwischen seiner Öffnungs- und Schließlage betätigbar ist. Zur Betätigung dieses Bowdenzugs kann dem Getriebemotor für die Unterarmbetätigung gegenüberliegend am Schlitten der Translationseinheit ein Antriebsmotor angeordnet sein, dessen Abtriebswelle zweckmäßigerweise mit der Abtriebswelle des Getriebemotors für die Unterarmbetätigung fluchtet. Der Bowdenzug kann sich dann, in einer Draufsicht gesehen, in einer Symmetrieebene des Schlittens erstrecken.

Nach einem anderen vorteilhaften Ausgestaltungsmerkmal besitzt eine Rotationseinheit eine mit einem oberseitigen Tragflansch für den festen Anschluß einer angrenzenden Systemeinheit versehene Hohlwelle, die um eine vertikale Drehachse drehbar, aber axialfest gelagert und mittels eines Getriebemotors über einen Umschlingungstrieb, dessen Umlenkscheiben unmittelbar auf der Hohlwelle und der parallel dazu verlaufenden Abtriebswelle des Getriebemotors aufgenommen sind, angetrieben ist.

Der Aufbau einer Hubeinheit kann demgegenüber durch eine Teleskopeinheit mit einem axialfest und einem axial bewegbaren Führungsrohr sowie einem Linearantrieb mit einer Gewindespindel gekennzeichnet sein, wobei die Gewindespindel axialfest mit dem einen Führungsrohr verbunden ist und eine auf der Gewindespindel geführte Spindelmutter mit dem anderen Führungsrohr in axial- und drehfester Verbindung steht. Bei dieser Ausgestaltung ist es von Vorteil, wenn die Spindelmutter in dem axial bewegbaren Führungsrohr fest angeordnet ist und sich ein Zapfen der Gewindespindel unterseitig über das axialfeste Führungsrohr hinauserstreckt, auf dem eine Umlenkrolle eines den Spindelantrieb von einem seitlich von der Teleskopeinheit angeordneten Antriebsmotor vermittelnden Umschlingungstriebs aufgenommen ist.

Anhand der beigefügten Zeichnung soll nachstehend der grundsätzliche Aufbau des erfindungsgemäßen Handhabungssystems anhand eines Ausführungsbeispiels erläutert werden. In schematischen Ansichten zeigen :

Figur 1   den grundsätzlichen Aufbau einer Ausführungsform des erfindungsgemäßen Handhabungssystems in einer seitlichen Ansicht,

Figur 2   eine Draufsicht auf das Handhabungssystem nach Fig. 1,

Figur 3   verschiedene Schwenklagen des Unterarms, der seinerseits an einem den Oberarm der Translationseinheit bildenden Schlitten schwenkbar angelenkt ist und an dessen von diesem Schlitten entfernten Ende der Greifer angelenkt ist,

Figur 4   verschiedene Schwenklagen des Greifers gegenüber dem am Schlitten der Translationseinheit angelenkten Unterarm,

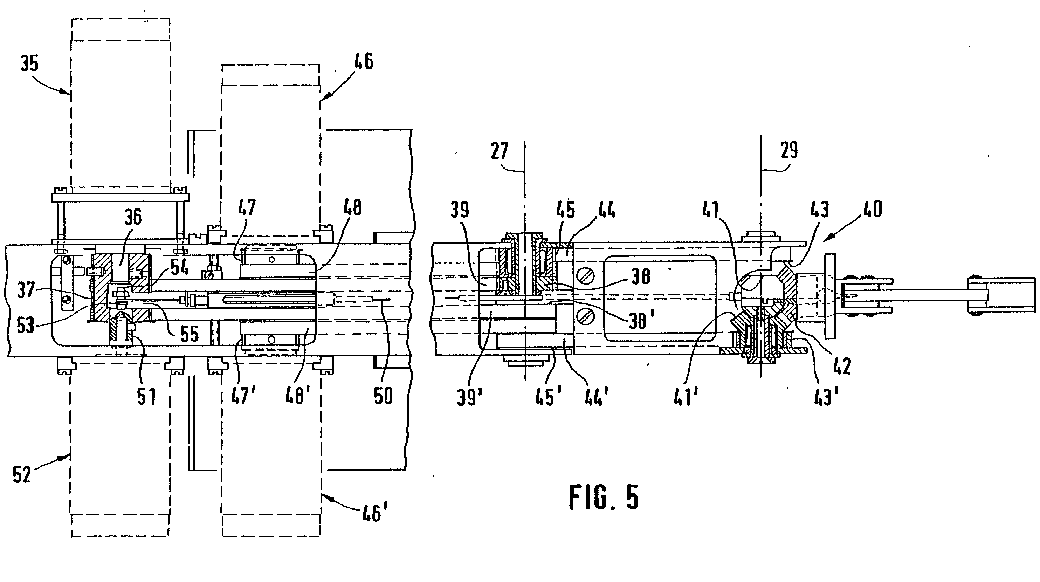

Figur 5   in einer Ansicht ähnlich Fig. 2 Einzelheiten der Antriebe zum Betätigen des Greifers und des Unterarms und

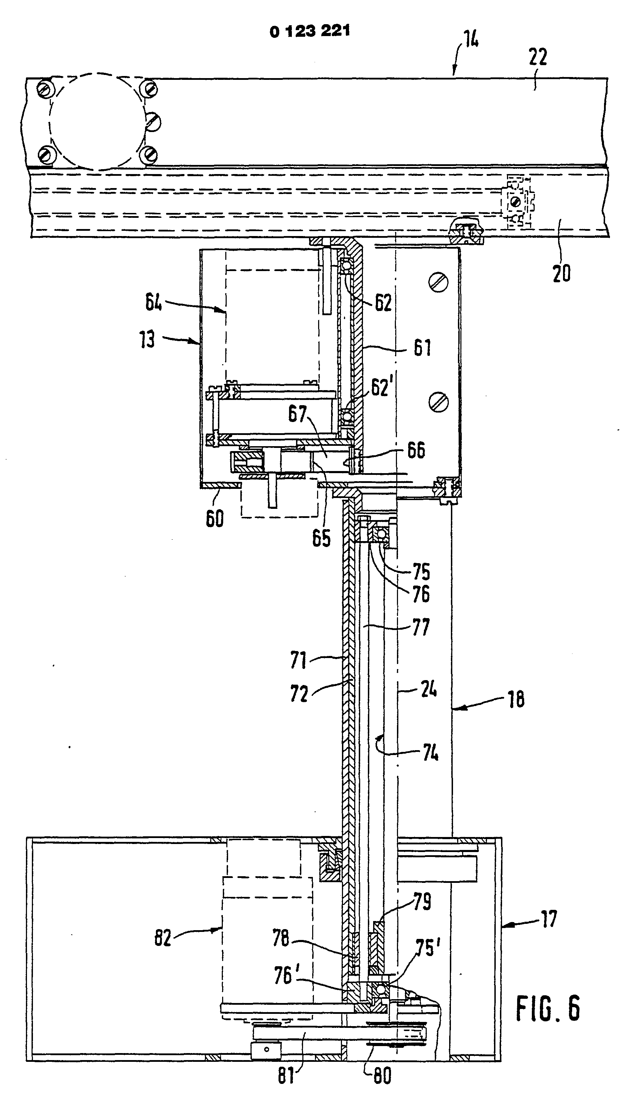

Figur 6   in einer Ansicht ähnlich Fig. 1 Einzelheiten der Rotationseinheit und der Hubeinheit.

Das als Ausführungsbeispiel veranschaulichte Handhabungssystem ist modular aus einer Anzahl miteinander kombinierbarer Einheiten in solcher Weise aufgebaut, daß in Anpassung an den jeweiligen Bedürfnisfall nur die zur Abdeckung der geforderten Bewegungsvorgänge notwendigen Einheiten Verwendung finden.

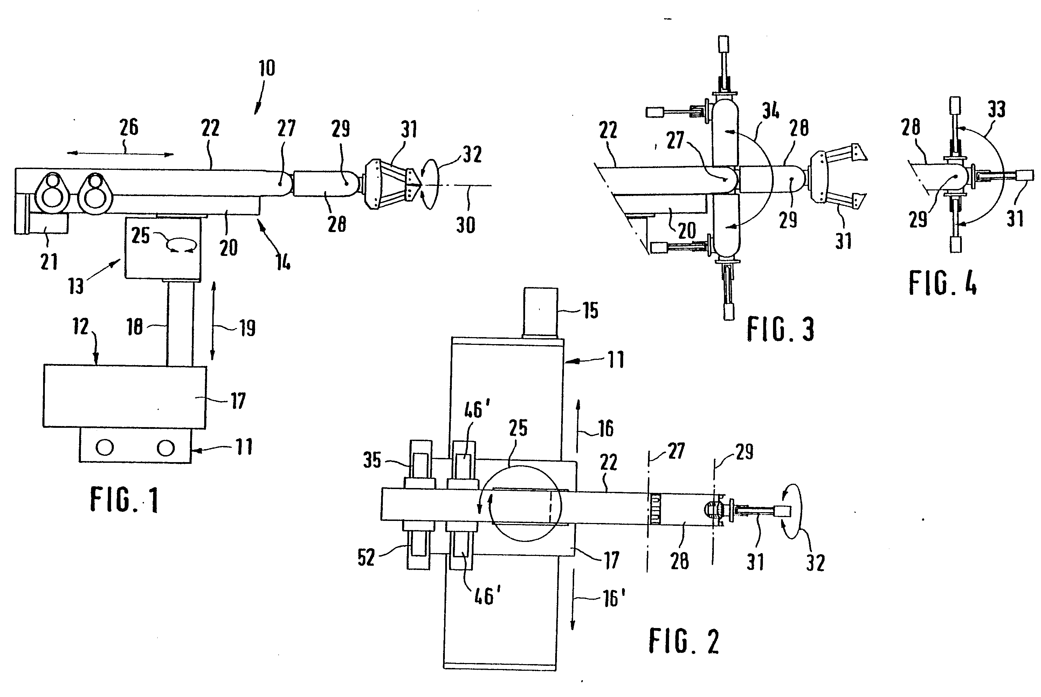

So besteht das insbesondere in den Fig. 1 und 2 veranschaulichte Handhabungssystem 10 aus einer Grundeinheit 11, einer auf dieser aufgenommenen Hubeinheit 12, einer am oberen Ende der Hubeinheit angeordneten Rotationseinheit 13 und einer auf dieser aufgenommenen Translationseinheit 14. Die Grundeinheit 11 besitzt eine Geradführung und einen auf dieser aufgenommenen, nicht gezeigten Schlitten, der mittels eines der Geradführung zugeordneten Linearantriebs, von dem lediglich der Motor 15 in Fig. 2 gezeigt ist, in den durch die Pfeile 16, 16' angedeuteten Richtungen längs der Geradführung hin- und herbewegbar ist.

Auf dem Schlitten der Grundeinheit 11 ist ein Gehäuseblock 17 der Hubeinheit 12 angeordnet, aus dem eine sich nach oben erstreckende Hubsäule 18 herauswächst, die in unten noch zu beschreibender Weise eine Hubbewegung in Richtung des Doppelpfeils 19 ausführen kann. Am oberen Ende der Hubsäule 18 ist die Rotationseinheit 13 angeflanscht, die ihrerseits eine Längsführung 20 der Translationseinheit 14 aufnimmt, in der ein mittels eines Linearantriebs, von dem lediglich der Antriebsmotor 21 dargestellt ist, hin- und herbewegbar geführter Schlitten 22 aufgenommen ist. Die Rotationseinheit 13 ist mit einem unten noch zu beschreibenden Drehantrieb versehen und ermöglicht ein Verschwenken der Längsführung 20 der Translationseinheit um eine mit der Hubachse 24 der Hubeinheit 12 zusammenfallende Drehachse nach beiden Drehrichtungen, wie der Doppel-Drehpfeil 25 in den Fig. 1 und 2 andeutet.

An einem Ende des in der Längsführung 20 der Translationseinheit 14 in Richtung der Längsführung axialbeweglich entsprechend dem Doppelpfeil 26 in Fig. 1 hin- und herbewegbaren Schlitten 22 ist ein um eine horizontal verlaufende Achse 27 schwenkbarer Unterarm 28 angelenkt, an dessen vom Schlitten 22 entfernten Ende ein um eine ebenfalls horizontal verlaufende Achse 29 schwenkbarer und darüber hinaus um eine Längsachse 30 rechts- oder linksdrehend gelagerter Greifer 31 als eigentliches Arbeitswerkzeug angelenkt ist. Die Drehbarkeit des Greifers 31 um die Greiferlängsachse 30 veranschaulicht der Doppel-Drehpfeil 32, während die Schwenkbarkeit des Greifers 31 um seine horizontale Anlenkachse 29 am Unterarm 28 aus der in den Fig. 1 und 2 ersichtlichen Mittellage um 90° nach jeder Seite in Fig. 4 durch den Doppelpfeil 33 angedeutet ist. Fig. 3 zeigt den Unterarm 28 mit dem Greifer 31 in Öffnungsstellung in einer Strecklage zu dem hin- und herbewegbar geführten Schlitten 22 der Translationseinheit sowie die gegenüber dieser Strecklage möglichen Verschwenkungen des Unterarms 28 um die horizontale Anlenkachse 27 am Schlitten 22 der Translationseinheit um 90° nach jeder Seite, wie der Doppelpfeil 34 andeutet.

Die Translationseinheit 14 ist mit einem Linearantrieb für die hin- und hergehende Bewegung des in der Längsführung 20 aufgenommenen Schlittens 22 ausgerüstet. Dieser Linearantrieb besteht aus einer sich in Führungsrichtung durch die Längsführung 20 hindurcherstreckenden Antriebsspindel, die in der Längsführung axialfest angeordnet ist und von einem an dem einen Ende der Längsführung angeordneten Antriebsmotor 21 über hier im einzelnen nicht interessierende Mittel rechts- oder linksdrehend angetrieben wird, ferner aus einer auf der Antriebsspindel aufgenommenen und mit deren Gewinde zusammenwirkenden Spindelmutter, die mit dem in der Längsführung hin- und herbewegbar geführten Schlitten der Translationseinheit axial- und drehfest verbunden ist. Darüber hinaus sind in der Nähe des vom Greifer 31 entfernten Endes des Schlittens 22 insgesamt vier Antriebsmotoren zum Betätigen des am anderen Ende des Schlittens angelenkten Unterarms 28 einerseits und des Greifers 31 andererseits angeordnet.

So wird der um die Schwenkachse 27 am Schlitten 22 angelenkte Unterarm 28 zwischen den in Fig. 3 veranschaulichten Schwenklagen mittels eines am Schlitten der Längsführung angeflanschten Getriebemotors 35 über einen Umschlingungstrieb angetrieben. Auf der Abtriebswelle 36 des Getriebemotors ist eine Treibscheibe 37 drehfest aufgenommen, die sich quer zur Längserstreckung der Längsführung 20 der Translationseinheit 14 in den hin- und herbewegbar geführten Schlitten 22 hineinerstreckt. Mit der Anlenkachse 27 des Unterarms 28 an den Schlitten 22 als Drechachse sind im bereich der genannten Anlenkachse zwei Umlenkscheiben 38, 38' in axialem Abstande symmetrisch zu einer Längsachse durch den Schlitten angeordnet. Auf diesen Umlenkscheiben und der mit der Abtriebswelle des Getriebemotors verbundenen Treibscheibe 37 sind zwei in Parallellagen zueinander verlaufende, synchron angetriebene Profilriemen 39, 39' geführt. Es ist ersichtlich, daß bei einer Drehung der Treibscheibe 37 nach der einen oder anderen Seite der Unterarm 28 eine entsprechende Schwenkbewegung ausführt, wie dies der Pfeil 34 in Fig. 3 andeutet.

Der Schwenk- und Drehantrieb des Greifers 31 umfaßt ein an dem von der Schwenkachse 27 entfernten Ende des Unterarms 28 angeordnetes Differentialgetriebe 40, das einander gegenüberliegend zwei Kegelräder 41, 41' umfaßt, deren Drehachsen mit der Greiferschwenkachse 29 am Unterarm fluchten. Auf der vom Unterarm entfernten Seite ist zwischen den genannten Kegelrädern 41, 41' ein weiteres Kegelrad 42 aufgenommen, mit dem der Greifer 31 axial- und drehfest in der Weise verbunden ist, daß sich die Greiferlängsachse 30 in der Drehachse dieses Zahnrades 42 forterstreckt. Mit den beiden einander gegenüberliegenden Kegelrädern 41, 41', deren Drehachsen mit der Schwenkachse 29 fluchten, sind Zahnscheiben 43, 43' fest verbunden, auf denen je ein Profilriemen 44, 44' geführt ist. Andererseits sind diese Profilriemen über je eine um die Anlenkachse 27 des Unterarms 28 an den Schlitten 22 freidrehbar gelagerte Doppelscheibe 45, 45' geführt. Der Antrieb erfolgt über zwei einander gegenüberliegend mit fluchtenden Abtriebswellen am Schlitten angeordnete Antriebsmotoren 46, 46' mit je einer Treibscheibe 47, 47', über die je ein die Antriebsverbindung zu den genannten Doppelscheiben 45, 45' im Bereich der Anlenkachse 27 vermittelnder Profilriemen 48, 48' geführt ist. Die Antriebsmotoren 46, 46' zum Erzeugen der Schwenk- und Drehbewegungen des Greifers 31 und demgemäß auch die Doppelscheiben im Bereich der Schwenkachse 27 sind jeweils unabhängig voneinander betätigbar. Die Umschlingungstriebe zwischen den genannten Antriebsmotoren und den Doppelscheiben im Bereich der Anlenkachse 27 erstrecken sich beidseitig der beiden parallel zueinander verlaufenden Profilriemen 39, 39' zum Erzeugen der Schwenkbewegungen des Unterarms 28.

Es ist ersichtlich, daß über die im Bereich der Schwenkachse 27 und über die Doppelscheiben 45, 45' geführten Umschlingungstriebe die beiden um die Schwenkachse 29 drehbar gelagerten Kegelräder 41, 41' des Differentialgetriebes 40 in Abhängigkeit von der Drehrichtung des zugeordneten Motors 46, 46' antreibbar sind. Bei gleichsinnigem Antrieb beider Antriebsmotoren 46, 46' führt der Greifer 31 gemäß Fig. 4 eine Schwenkbewegung um seine Anlenkachse 29 aus, wie der Doppelpfeil 33 zeigt. Wenn die Antriebsmotoren 46, 46' gegensinnig mit gleichen Drehzahlen umlaufen, bleibt der Greifer in der Strecklage, führt jedoch um die Greiferlängsachse 30 eine Drehbewegung aus, wie der Pfeil 32 in den Fig. 1 und 2 andeutet. Wenn die beiden Antriebsmotoren mit unterschiedlichen Drehzahlen gleich- oder gegensinnig umlaufen, führt dies zu einander überlagerten Schwenk- und Drehbewegungen des Greifers.

Die Betätigung des Greifers zwischen der aus Fig. 1 ersichtlichen Schließlage in die in Fig. 3 dargestellte Öffnungsstellung erfolgt mittels eines Bowdenzugs 50, der sich axial durch den Schlitten 22 hindurcherstreckt und im Bereich der Anlenkachse 27 entsprechend der jeweiligen Schwenklage des Unterarms 28 umgelenkt ist, dann in Längsrichtung durch den Unterarm hindurchtritt und schließlich bei entsprechender Umlenkung in Abhängigkeit von der jeweiligen Greiferschwenklage durch das Differentialgetriebe 40 sich hindurcherstreckt und in im einzelnen hier nicht interessierender Weise an den betätigbaren Elementen des Greifers 31 befestigt ist. Das vom Greifer entfernte Ende dieses Bowdenzugs ist mit der Abtriebswelle 51 eines weiteren Antriebsmotors 52 verbunden, dessen Drehachse mit der Drehachse der Abtriebswelle 36 des die Unterarmbewegung vermittelnden Getriebemotors 35 fluchtet. Ein Zapfen 53 der Abtriebswelle 51 des zuletztgenannten Antriebsmotors 52 ragt axial in eine Mittelausnehmung 54 der mit dem Getriebemotor für die Unterarmverschwenkung verbundenen Treibscheibe 37 hinein und letztere ist über einen Umfangsbereich von mehr als 180° auf der zum Unterarm hinweisenden Seite mit einer Ausnehmung 55 versehen, durch die sich der Bowdenzug 50 hindurcherstreckt. Beim Betätigen des Greifers 31 zwischen seiner Schließ- und Öffnungslage wird der an den genannten Zapfen 53 der Abtriebswelle 51 des Motors 52 angeschlossene Bowdenzug 50 mehr oder weniger auf- bzw. abgespult.

Die auf der Hubsäule 18 der Hubeinheit 12 aufgenommene Rotationseinheit 13 besteht aus einem drehfest über einen Ringflansch mit einem vertikal bewegbaren Führungsrohr der Hubeinheit verbundenen Gehäuse 60 mit einer Hohlwelle 61, die mit der Hubachse 24 der Hubeinheit fluchtet und mittels im Gehäuse fest angeordneter Lager 62, 62' drehbar gelagert ist. Am oberen Ende der Hohlwelle ist ein Tragflansch 63 angeordnet, mit dem die Längsführung 20 der Translationseinheit 22 fest verbunden ist. Seitlich von der Hohlwelle 61 ist im Gehäuse 60 der Rotationseinheit 13 ein Getriebemotor 64 aufgenommen, der eine unterseitige Treibscheibe 65 besitzt und über eine entsprechende Zahnscheibe 66, die drehfest auf der drehbar gelagerten Hohlwelle 61 aufgenommen ist, und einen auf diesen Scheiben geführten Profilriemen 67 mit der Hohlwelle in Antriebsverbindung steht.

Die Hubeinheit 12 umfaßt einen auf der Grundeinheit aufgenommenen Gehäuseblock 17, von dem sich eine Hubsäule 18 vertikal nach oben erstreckt. Die Hubsäule besteht aus einem äußeren im Gehäuseblock fest gelagerten Führungsrohr 71, in dem in der Art einer Teleskopführung ein Innenrohr 72 drehfest, jedoch vertikal bewegbar aufgenommen ist. Ferner erstreckt sich durch das innere Führungsrohr 72 und unterseitig über dieses hinaus eine Gewindespindel 74, die im Bereich ihrer beiden Enden mittels je eines fest mit dem äußeren Führungsrohr 71 verbundenen Lagers 75, 75' drehbar gelagert ist. Die obere Spindellagerung 75 ist dabei in einem Lagerring 76 aufgenommen, der über eine Zugstange 77 axialfest mit einem die untere Lagerung 75' aufnehmenden und seinerseits fest mit dem äußeren Führungsrohr 71 verbundenen Lagerring 76' in der Weise verbunden ist, daß das innere Führungsrohr 72 gegenüber dem das obere Spindellager aufnehmenden Lagerring 76 axial frei bewegbar ist. In der Nähe des unteren Endes des inneren Führungsrohrs 72 ist in diesem dreh- und axialfest ein Zwischenring 78 angeordnet, mit dem wiederum dreh- und axialfest eine auf der Gewindespindel 74 geführte Spindelmutter 79 verbunden ist. Auf dem unteren Ende der Antriebsspindel sitzt eine Profilriemenscheibe 80 und der Drehantrieb der Spindel erfolgt unter Zwischenschaltung eines Profilriemens 81 über einen seitlich von den Führungsrohren im Gehäuseblock angeordneten Antriebsmotor 82.

Die ebenfalls mit einem Linearantrieb ausgerüstete Grundeinheit 11 ist in ähnlicher Weise wie die oben erläuterte Translationseinheit 14 mit einem eine motorisch angetriebene Antriebsspindel aufweisenden Linearantrieb ausgerüstet, der angesichts seines mit dem Linearantrieb der Translationseinheit ähnlichen Aufbaues nachstehend keiner Erläuterung bedarf.

**Patentansprüche**

1. Handhabungssystem (10), insbesondere für kleine Lasten und/oder begrenzte Zugriffswege, mit mehreren Verstelleinheiten zum Bewegen eines Arbeitsmittels jeweils in einer Richtung bzw. um eine Achse, die unter Weglassung der einen oder anderen, für den jeweiligen Bedarfsfall nicht benötigten Verstelleinheit miteinander kombinierbar sind, und bei dem das Arbeitsmittel einem in einer Längsführung (20) einer Translationseinheit (14) mittels eines Linearantriebs (21) hin- und herbewegbaren Schlitten (22) zugeordnet sowie gegenüber letzterem durch von dem Lineartrieb der Translationseinheit (14) unabhängige Antriebe um zwei im Winkel zueinander verlaufende Achsen (29, 30) bewegbar ist, dadurch gekennzeichnet, daß als Arbeitsmittel ein zwischen einer Greif- und Öffnungslage betätigbarer Greifer (31) dreh- und schwenkbar an einem vom Schlitten (22) der Translationseinheit (14) entfernten Ende eines seinerseits an dem Schlitten angelenkten Unterarms (28) angelenkt ist und daß ein Schwenk- und Drehantrieb für den Greifer ein Differentialgetriebe (40) mit zwei einander gegenüberliegend und um die Greiferschwenkachse (29) drehbar gelagerten Kegelrädern (41, 41') umfaßt, die unabhängig voneinander wahlweise rechts- oder linksdrehend angetrieben sind und gemeinsam mit einem zwischen ihnen aufgenommenen dritten Kegelrad (42) in Zahneingriff stehen, das um eine rechtwinklig zur Greiferschwenkachse verlaufende Achse (30) drehbar gelagert und mit dem der sich in der Zahnraddrehachse forterstreckende Greifer dreh- und axialfest verbunden ist, und daß die beiden drehbar um die Greiferschwenkachse gelagerten Kegelräder mittels am Schlitten der Translationseinheit angeflanschter Antriebsmotoren (46, 46') über in Parallelebenen zueinander verlaufende Umschlingungstriebe (44, 44') angetrieben sind.

2. Handhabungssystem nach Anspruch 1, dadurch gekennzeichnet, daß der an einem Ende des Schlittens (22) der Translationseinheit (14) angelenkte Unterarm (28) mittels eines Getriebemotors (35), der an dem vom Unterarm entfernten Ende des Schlittens angeflanscht ist, über einen sich längs durch den Schlitten hindurcherstreckenden Umschlingungstrieb (39, 39') angetrieben wird.

3. Handhabungssystem nach Anspruch 2, dadurch gekennzeichnet, daß der Umschlingungstrieb zwei im Abstand voneinander in Parallelebenen gleichsinnig und synchron umlaufende Umschlingungsmittel (39, 39') umfaßt.

4. Handhabungssystem nach einem der Ansprüche 1 bis 3, dadurch gekennzeichnet, daß die in Parallelebenen umlaufenden Umschlingungstriebe (44, 44') des Schwenk- und Drehantriebs des Greifers (31) über um die Anlenkachse (29) des Unterarms (28) an den Schlitten (22) der Translationseinheit frei drehend gelagerte Umlenkscheiben (45, 45') geführt sind, die ihrerseits über je einen weiteren Umschlingungstrieb (48, 48') angetrieben werden, wobei diese weiteren Umschlingungstriebe sich in Parallellage zueinander durch den Schlitten (22) hindurcherstrecken und über Treibscheiben (47, 47') angetrieben werden, deren Drehachsen miteinander fluchten und die auf den Abtriebswellen einander gegenüberliegend am Schlitten angeordneter Antriebsmotoren (46, 46') drehfest aufgenommen sind.

5. Handhabungssystem nach einem der Ansprüche 1 bis 4, dadurch gekennzeichnet, daß der an dem vom Schlitten (22) der Translationseinheit (14) entfernten Ende des Unterarms (28) angelenkte Greifer (31) mittels eines Bowdenzugs (50), der sich durch den Schlitten, den daran angelenkten Unterarm und das im Bereich der Greiferschwenkachse (29) angeordnete Differentialgetriebe (40) hindurcherstreckt, zwischen seiner Greif- und Öffnungslage betätigbar ist.

6. Handhabungssystem nach Anspruch 5, dadurch gekennzeichnet, daß ein Antriebsmotor (52) zur Betätigung des Bowdenzugs (50) den Getriebemotor (35) für die Betätigung des Unterarms (28) gegenüberliegend am Schlitten (22) der Translationseinheit (14) angeordnet ist.

7. Handhabungssystem nach Anspruch 6, dadurch gekennzeichnet, daß die Abtriebswellen (36, 51) des Getriebemotors (35) für die Betätigung des Unterarms (28) und des Antriebsmotors (52) zur Betätigung des Bowdenzugs (50) miteinander fluchten und daß der Bowdenzug sich, in einer Draufsicht gesehen, in einer Symmetrieebene des Schlittens (22) erstreckt.

8. Handhabungssystem nach einem der Ansprüche 1 bis 7, dadurch gekennzeichnet, daß eine Rotationseinheit (13) eine mit einem oberseitigen Tragflansch (63) für den festen Anschluß einer angrenzenden Systemeinheit versehene Hohlwelle (61) besitzt, die um eine vertikale Drehachse (24) drehbar, aber axialfest gelagert und mittels eines Getriebemotors (64) über einen Umschlingungstrieb (67), dessen Umlenkscheiben (65, 66) unmittelbar auf der Hohlwelle und der parallel dazu verlaufenden Antriebswelle des Getriebemotors aufgenommen sind, angetrieben ist.

9. Handhabungssystem nach einem der Ansprüche 1 bis 8, dadurch gekennzeichnet, daß eine Hubeinheit (12) eine Teleskopeinheit (18) mit einem axialfesten und einem axial bewegbaren Führungsrohr (71, 72) sowie einem Linearantrieb mit einer Gewindespindel (74), die axialfest mit dem einen Führungsrohr (71) verbunden ist, und einer auf der Gewindespindel geführten und mit dem anderen Führungsrohr (72) axialfest verbundenen Spindelmutter (79) umfaßt.

10. Handhabungssystem nach Anspruch 9, dadurch gekennzeichnet, daß die Spindelmutter (79) in dem axial bewegbaren Führungsrohr (72) fest angeordnet ist und daß sich ein Zapfen der Gewindespindel (74) unterseitig über das axialfeste Führungsrohr (71) hinauserstreckt, auf dem eine Umlenkrolle (80) eines den Spindelantrieb von einem seitlich von der Teleskopeinheit angeordneten Antriebsmotor (82) vermittelnden Umschlingungstriebs (81) aufgenommen ist.

## Claims

1. Manipulation system (10), in particular for small loads and/or restricted access paths, with several setting units for moving a working means each time in one direction or about one axis, which are combinable one with the other while omitting the one or the other setting unit not needed for the respective case of need, and in which the working means is associated with a carriage (22), movable to and fro in a longitudinal guide (20) of a translatory unit (14) by means of a linear drive (21), as well as movable relative to the carriage (22) about two axes (28, 30) extending at an angle each to the other by drives independent or the linear drive of the translatory unit (14), characterised thereby, that a gripper (31), actuable between a gripping position and an opening position, is articulated as working means to be rotatable and pivotable at an end, remote from the carriage (22) of the translatory unit (14), of a lower arm (28) in its turn articulated at the carriage and that a rotary and pivoted drive for the gripper comprises a differential gear (40) with two bevel gear wheels (4, 41'), which are borne to lie each opposite the other and be rotatable about the gripper pivot axis (29), are driven each independently of the other selectably to turn to the left or right and which in common stand in toothed engagement with a third bevel gear wheel (42), which is received between them and borne to be rotatable about an axis (30) extending at a right angle to the gripper pivot axis and with which the gripper, extending forth in the rotational axis of the toothed wheel, is connected to be fast rotationally and axially, and that both the bevel gear wheels, which are borne to be rotatable about the gripper pivot axis, are driven by way of looping drives (44, 44'), which extend in mutually parallel planes, by means of drive motors (46, 46') flanged on at the carriage of the translatory unit.

2. Manipulation system according to claim 1, characterised thereby, that the lower arm (28), which is articulated at one end of the carriage (22) of the translatory unit (14), is driven by way of a looping drive (39, 39'), which extends longitudinally through the carriage by means of a geared motor (35), which is flanged on at the carriage end remote from the lower arm.

3. Manipulation system according to claim 2, characterised thereby, that the looping drive comprises two looping means (39, 39') circulating synchronously in the same sense in parallel planes at a spacing each from the other.

4. Manipulation system according to one of the claims 1 to 3, characterised thereby, that the looping drives (44, 44'), circulating in parallel planes, of the pivotal and rotary drive of the gripper (31) are guided by way of deflecting pulleys (45, 45'), which are borne to be freely rotatable about the articulation axis (29) of the lower arm (28) at the carriage (22) of the translatory unit and which in their turn are each driven by way of a respective further looping drive (48, 48'), wherein these further looping drives extend through the carriage (22) in mutually parallel position and are driven by way of drive pulleys (47, 47'), the rotational axes of which are each aligned with the other and which are received rotationally fast on the drive shafts of drive motors (46, 46') arranged one lying opposite the other at the carriage.

5. Manipulation system according to one of the claims 1 to 4, characterised thereby, that the gripper (31), which is articulated at that end of the lower arm (28), which is remote from the carriage (22) of the translatory unit (14), is actuable between its gripping position and its opening position by means of a Bowden pull (50), which extends through the carriage, the lower arm articulated thereat and the differential gear (40) arranged in the region of the gripper pivot axis (29).

6. Manipulation system according to claim 5, characterised thereby, that a drive motor (52) for the actuation of the Bowden pull (50) is arranged at the carriage (22) of the translatory unit (14) and lying opposite the geared motor (35) for the actuation of the lower arm (28).

7. Manipulation system according to claim 6, characterised thereby, that the drive shafts (36, 51) of the geared motor (35) for the actuation of the lower arm (28) and of the drive motor (52) for the actuation of the Bowden pull (50) are each in alignment with the other and that the Bowden pull, as seen in a plan view, extends in a plane of symmetry of the carriage (22).

8. Manipulation system according to one of the claims 1 to 7, characterised thereby, that a rotary unit (13) possesses a hollow shaft (61), which is provided with a carrier flange (63) at the upper side for the firm connection of an adjoining system unit, is borne to be rotatable about a vertical rotational axis (24), but axially fast and driven by means of a geared motor (64) by way of a looping drive (67), the deflecting pulleys (65, 66) of which are received directly on the hollow shaft and on the drive shaft, extending parallelly thereto, of the geared motor.

9. Manipulation system according to one of the claims 1 to 8, characterised thereby, that a stroke unit (12) comprises a telescopic unit (18) with an axially fast and an axially movable guide tube (71, 72) as well as a linear drive with a threaded spindle (74), which is connected axially fast with the one guide tube (71), and a spindle nut (79), which is guided on the threaded spindle and connected axially fast with the other guide tube (72).

10. Manipulation system according to claim 9, characterised thereby, that the spindle nut (79) is fixedly arranged in the axially movable guide tube (72) and that a spigot of the threaded spindle (74) extends at the underside beyond the axially fast guide tube (71), on which is received a deflecting roller (80) of a looping drive (81) providing the spindle drive from a drive motor (82) arranged laterally of the telescopic unit.

## Revendications

1. Système manipulateur (10), en particulier pour petites charges et/ou courses d'accès limitées, comportant plusieurs unités de mise en mouvement pour faire effectuer un mouvement à un outil, respectivement dans une direction ou autour d'un axe, unités que l'on peut combiner l'une avec l'autre, en éliminant l'une ou l'autre unité de mise en mouvement qui n'est pas nécessaire pour le cas d'utilisation respectif ; et système manipulateur dans lequel l'outil est rattaché à un chariot (22), qui peut prendre un mouvement de va-et-vient dans un guidage longitudinal (20) d'une unité de translation (14) au moyen d'un entraînement linéaire (21), et peut être mis en mouvement, par rapport à ce chariot, autour de deux axes (29, 30) perpendiculaires l'un à l'autre, au moyen de mécanismes d'entraînement indépendants du mécanisme d'entraînement linéaire de l'unité de translation (14), caractérisé en ce que, comme outil, une pince (31), qui peut se manœuvrer entre une position de prise et une position d'ouverture, est articulée, avec possibilité de rotation et de pivotement, à une extrémité, éloignée du chariot (22) de l'unité de translation (14), d'un avant-bras (28) articulé de son côté au chariot ; et en ce qu'un mécanisme de pivotement et de rotation pour la pince comprend un mécanisme différentiel (40), avec deux pignons coniques (41, 41') qui sont situés en face l'un de l'autre, qui sont portés avec possibilité de rotation autour de l'axe de pivotement de la pince (29), qui sont entraînés, indépendamment l'un de l'autre et au choix, en rotation à droite ou en rotation à gauche et qui engrènent ensemble avec un troisième pignon conique (42) qui est repris entre eux, qui peut tourner autour d'un axe (30) qui court perpendiculairement à l'axe de pivotement de la pince et avec lequel la pince, qui s'étend dans l'axe de rotation du pignon, est reliée sans possibilité de rotation relative, ni de déplacement axial relatif ; et en ce que les deux pignons coniques, qui sont portés avec possibilité de rotation autour de l'axe de pivotement de la pince, sont entraînés au moyen de moteurs d'entraînement (46, 46') fixés par flasque au chariot de l'unité de translation, par l'intermédiaire de mécanismes à enroulement (44, 44') qui courent dans des plans parallèles l'un à l'autre.

2. Système manipulateur selon la revendication 1, caractérisé en ce que l'avant-bras (28), articulé à une extrémité du chariot (22) de l'unité de translation (14), est entraîné au moyen d'un moto-réducteur (35) fixé par flasque à l'extrémité du chariot éloignée de l'avant-bras, par l'intermédiaire d'un mécanisme à enroulement (39, 39') qui s'étend longitudinalement à travers le chariot.

3. Système manipulateur selon la revendication 2, caractérisé en ce que le mécanisme à enroulement comprend deux moyens d'enroulement (39, 39') qui courent, dans le même sens et en synchronisme, dans des plans parallèles à une certaine distance l'un de l'autre.

4. Système manipulateur selon l'une des revendications 1 à 3, caractérisé en ce que les mécanismes à enroulement (44, 44'), courant dans les plans parallèles, de l'entraînement de pivotement et de rotation de la pince (31) sont guidés sur des poulies de changement de direction (45, 45') qui sont portées de façon à pouvoir tourner librement autour de l'axe d'articulation (29) de l'avant-bras (28) sur le chariot (22) de l'unité de translation et qui sont entraînées de leur côté par l'intermédiaire respectivement d'un autre mécanisme à enroulement (48, 48'), étant précisé que ces autres mécanismes à enroulement s'étendent à travers le chariot (22) en position parallèle l'un à l'autre et sont entraînés par l'intermédiaire de poulies motrices (47, 47') dont les axes de rotation sont alignés l'un avec l'autre et qui sont reprises, sans possibilité de rotation relative, sur les arbres de sortie de moteurs d'entraînement disposés sur le chariot en face l'un de l'autre.

5. Système manipulateur selon l'une des revendications 1 à 4, caractérisé en ce que l'on peut manœuvrer, entre sa position de prise et sa position d'ouverture, la pince (31), articulée à l'extrémité de l'avant-bras (28) éloignée du chariot (22) de l'unité de translation (14) au moyen d'un câble souple type Bowden (50) qui s'étend à travers le chariot, l'avant-bras qui y est articulé et le mécanisme différentiel (40) disposé dans la zone de l'axe de pivotement de la pince (29).

6. Système manipulateur selon la revendication 5, caractérisé en ce qu'un moteur d'entraînement (52) pour la manœuvre du câble souple type Bowden (50) est disposé sur le chariot (22) de l'unité de translation (14) en face du moto-réducteur (35) pour la manœuvre de l'avant-bras (28).

7. Système manipulateur selon la revendication 6, caractérisé en ce que les arbres de sortie (36, 51) du moto-réducteur (35) pour la manœuvre de l'avant-bras (28) et du moteur d'entraînement (52) pour la manœuvre du câble souple type Bowden (50) sont alignés l'un avec l'autre ; et en ce que le câble souple type Bowden s'étend, vu de dessus, dans un plan de symétrie du chariot (22).

8. Système manipulateur selon l'une des revendications 1 à 7, caractérisé en ce qu'une unité de rotation (13) possède un arbre creux (61) qui est muni, à sa face supérieure, d'un flasque-support (63) pour le raccordement fixe de l'unité du système voisine, qui tourillonne autour d'un axe de rotation verticale (24), avec possibilité de rotation, mais sans possibilité de déplacement axial relatif, et qui est entraîné au moyen d'un moto-réducteur (64), par l'intermédiaire d'un entraînement à enroulement (67) dont les poulies de changement de direction (66, 66') sont directement montées sur l'arbre creux et sur l'arbre d'entraînement, qui court parallèlement à lui, du moto-réducteur.

9. Système manipulateur selon l'une des revendications 1 à 8, caractérisé en ce qu'une unité de levage (12) comporte une unité télescopique (18) comprenant un tube de guidage (71, 72) fixe en position axiale et un tube de guidage mobile en position axiale ainsi qu'un mécanisme d'entraînement linéaire avec une vis-mère (74) reliée, sans possibilité de déplacement axial relative, à l'un des tubes de guidage (71) et un écrou guidé sur la vis-mère et relié, sans possibilité de déplacement axial relatif, à l'autre tube de guidage (72).

10. Système manipulateur selon la revendication 9, caractérisé en ce que l'écrou (79) est disposé dans le tube de guidage (72) qui peut se déplacer axialement ; et en ce que, vers le bas, au-delà du tube de guidage (71) fixe en position axiale s'étend un tourillon de la vis-mère (74) sur lequel est montée une poulie de changement de direction (80) d'un mécanisme à enroulement (81) qui assure l'entraînement de la broche depuis un moteur d'entraînement (82) disposé sur le côté de l'unité télescopique.

FIG. 1

FIG. 2

FIG. 3

FIG. 4

0 123 221

FIG. 5

FIG. 6